# EUROPÄISCHE PATENTSCHRIFT

(11) **EP 1 621 441 B1**
(45) Veröffentlichungstag und Bekanntmachung des Hinweises auf die Patenterteilung: **26.10.2011**
(21) Anmeldenummer: 05012098.9
(22) Anmeldetag: 04.06.2005
(51) Int. Cl.: B62D 1/04, B62D 1/06

(54) **Lenkrad für Kraftfahrzeuge**
Automotive steering wheel
Volant pour véhicules automobiles

(30) Priorität: 30.07.2004 DE 102004037112
(43) Veröffentlichungstag der Anmeldung: 01.02.2006
(73) Patentinhaber: Dr. Ing. h.c. F. Porsche AG, 70435 Stuttgart (DE)
(72) Erfinder: Baum, Michael, 75233 Tiefenbronn-Lehningen (DE)

(56) Entgegenhaltungen:
- EP-A2- 1 621 442
- WO-A-00/05123
- DE-A1- 4 314 573
- DE-A1- 19 919 278

## Beschreibung

Die Erfindung bezieht sich auf ein Lenkrad für Kraftfahrzeuge, insbesondere Personenkraftwagen nach dem Oberbegriff des Patentanspruchs 1.

Ein bekanntes Lenkrad, DE 35 42 105 C2, wird gebildet durch einen ein hartes Kernstück und eine Umhüllung aus einem weichen Material umfassenden Lenkradring. Das Kernstück ist ein Metalleinsatz, und die Umhüllung besteht aus einem weichen Werkstoff mit relativ hoher Molekülmasse. Der Lenkradring weist einen gleichförmigen Querschnitt von im wesentlichen kreisförmiger oder elliptischer Gestalt auf.

In der DE 101 48 327 A1 wird ein Lenkrad für ein Kraftfahrzeug behandelt, und zwar mit einem in seiner Form veränderbaren Lenkradkranz. Dieser Lenkradkranz ist in der Weise formveränderlich, dass sich im Verlauf einer Lenkrad-Drehbewegung aufgrund dieser Formveränderung der Abstand zwischen einem kranzfesten Punkt, an dem sich die Hand des Fahrzeugführers befindet, und dem ortsfesten Abstützpunkt des Fahrerschultergelenks an der Lehne des Fahrzeugsitzes um einen geringen Betrag ändert.

Aus der DE 43 14 573 A1 ist ein Lenkrad, insbesondere für zweispurige Fahrzeuge aus einem vorwiegend kreisförmigen Lenkkranz und mindestens einer die Nabe mit dem Lenkkranz verbindenden Lenkradspeiche, bekannt, wobei der Lenkkranz und/oder die Lenkradspeichen ergonomisch ausgeformte Griffelemente aufweisen. In den Lenkkranz sind zumindest in einem Teil des Umfangs, hauptsächlich auf der dem Fahrer abgewandten Seite, Polsterflächen aus einem mit Hohlräumen versehenen elastischen Material integriert. Damit der Umfang des Lenkrades unterschiedlichen Handgrößen besser angepasst werden kann, sind in den Lenkkranz zumindest in einem Umfangsbereich, der dem der Griffstücke entspricht, Polsterflächen aus einem mit Hohlräumen versehenen elastischen Material integriert. Diese Hohlräume erstrecken sich schlauchförmig und parallel zur Oberfläche und sind untereinander mit einer Pumpe so verbunden, dass sie je nach Handgröße mit einer variablen Menge eines flüssigen oder gasförmigen Mediums befüllt werden können, wodurch sich der Umfang des Lenkkranzes vergrößern und somit anpassen lässt.

Aufgabe der Erfindung ist es, ein Lenkrad für Kraftfahrzeuge mit einem Lenkradring zu schaffen, der zumindest abschnittsweise mit Vorkehrungen versehen ist, durch die die Lenkradergonomie an Wünsche eines Fahrers eines jeweiligen Kraftfahrzeugs anpassbar ist.

Diese Aufgabe wird durch die Merkmale des Patentanspruchs 1 gelöst. Weitere, die Erfindung ausgestaltende Merkmale sind in den Unteransprüchen enthalten. Die mit der Erfindung hauptsächlich erzielten Vorteile sind darin zu sehen, dass eine ein metallisches Gestell eines Lenkradrings umgebende Hüllvorrichtung in Greifbereichen von Händen eines ein Lenkrad bedienenden Fahrers mit wenigstens einer vom Fahrer veränderbaren flexiblen, jedoch definiert formhaltbaren Greifeinrichtung versehen ist, dergestalt, dass die Greifeinrichtung aus einem Material besteht, welches bei normalem Greifen des Lenkrads formhaltig bzw. formstabil ist, jedoch unter stark erhöhtem Kraftaufwand verformt werden kann. Sie bietet dem Fahrer die Möglichkeit Greifbereiche mit einer für ihn günstige Form zu versehen. Die Greifeinrichtung besteht aus an sich bekanntem Knet, Silikon oder dgl. und umgibt auf einfache Weise die Hüllvorrichtung. Aufwandsarm und die Funktion unterstützend verwirklichen lässt es sich, wenn die Greifeinrichtung von einem Lenkradüberzug umgeben ist und zwischen Greifeinrichtung und Lenkradüberzug eine Folie vorgesehen ist. Schließlich ist die Greifeinrichtung dann lagegünstig ausgebildet, wenn sie sich über Teilumfänge des Lenkradkranzes im Bereich von in einer Grundstellung des Lenkrads horizontal ausgerichteten Lenkradspeichen erstreckt, und zwar am Außenumfang des Lenkradkranzes. Schließlich wird eine vorteilhafte Ausbildung auch dadurch erreicht, dass sich die Greifeinrichtung abschnittsweise zwischen Lenkradkranz und der jeweiligen Speiche erstreckt.

In der Zeichnung wird ein Ausführungsbeispiel der Erfindung gezeigt, das nachstehend näher erläutert wird.

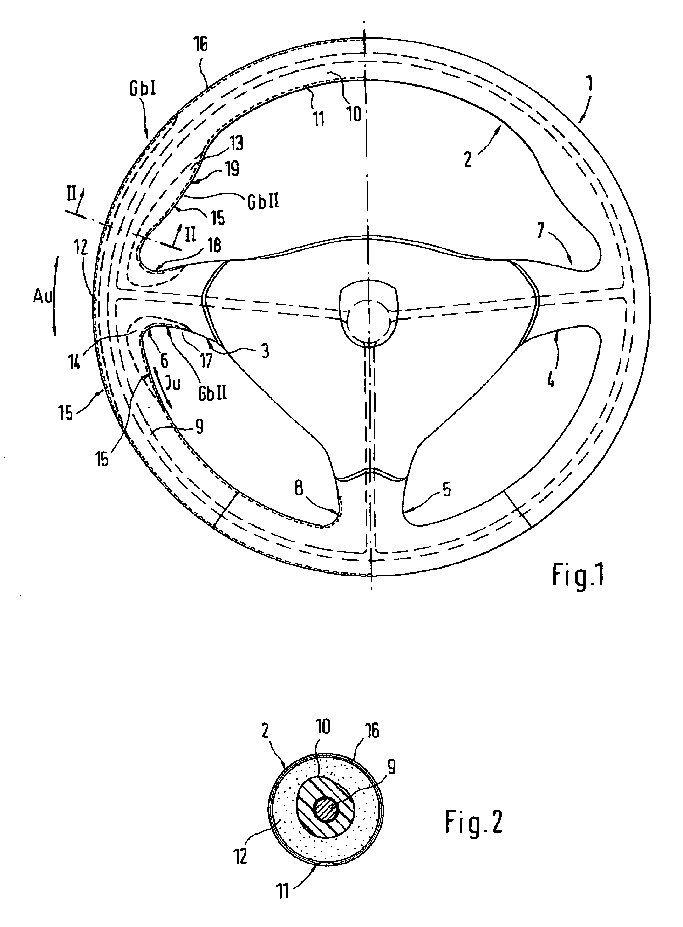

Es zeigen
- Fig. 1: eine Ansicht von oben auf ein Lenkrad für Kraftfahrzeuge nach der Erfindung,
- Fig. 2: einen Schnitt nach der Linie II-II der Fig. 1.

Ein Lenkrad 1 für ein nicht gezeigtes Kraftfahrzeug bspw. der Personenwagengattung ist in einer Grundstellung d.h. ohne Lenkradeinschlag dargestellt und umfasst einen Lenkradring 2, zwei horizontale Speichen 3 und 4 sowie eine aufrechte Speiche 5; letztere erstreckt sich unterhalb der Speichen 3 und 4. Die Speichen 3, 4 sowie 5 münden bei 6, 7 und 8 in den Lenkradring 2, der ein Gestell 9 aus Leichtmetall, Stahl oder dgl. umfasst. Das Gestell 9 wird von einer Hüllvorrichtung 10 umgeben ist, die aus einem gummiartigen bspw. weichem Werkstoff hoher relativer Molekülmasse besteht. Die Hüllvorrichtung 10 ist mit einem Lenkradüberzug 11 aus geeignetem Werkstoff wie Leder verkleidet.

Das Lenkrad 1 besitzt Greifbereiche Gbl, Gbll uns Gblll für Hände eines das Lenkrad 1 bedienenden Fahrers. Der Greifbereich Gbl ist in der Nähe der Speiche 3 am Außenumfang Au am Lenkrad 1 vorgesehen; die Greifbereiche Gbl und Gbll am Innenumfang lu zwischen dem Lenkradring 2 und der Speiche 3. Die Greifbereiche Gbl, Gbll und Gblll sind mit einer erste, zweite und dritte Greifabschnitte 12, 13 und 14 aufweisenden Greifeinrichtungen 15 versehen, die vom Fahrer bzw. von seinen Fingern weitgehend individuell bezüglich Form veränderbar sind und einem flexiblen jedoch formhaltbaren Werkstoff bestehen. Hierfür eignet sich bspw. Knet, Silikon oder ein anderes ähnliche Eigenschaften aufweisendes Material.

Die Greifeinrichtung 15 umgibt die Hüllvorrichtung 10 zumindest örtlich, und sie wird von dem Lenkradüberzug 11 verkleidet, wobei zwischen Lenkradüberzug 11 und der Greifeinrichtung 15 eine Folie 16 vorgesehen ist. Darüber hinaus erstreckt sich der erste Greifabschnitt 12 der Greifeinrichtung 15 über einen Teilumfang Tu des Lenkradrings 2, und zwar im Bereich von der in der Grundstellung - kein Lenkradeinschlag - des Lenkrads 1 horizontal ausgerichteten Lenkradspeiche 3. Im Ausführungsbeispiel verläuft der erste Greifabschnitt 12 vor allem am Außenumfang Au des Lenkradrings 2. Am Innenumfang lu des Lenkradrings 2 sind der zweite Greifabschnitt 13 und der dritte Greifabschnitt 14 der Greifeinrichtung 15 angeordnet, derart, dass sich die Greifabschnitte 13 und 14 zwischen Lenkradring 2 und der Speiche 3 erstrecken d.h. zu beiden Seiten 17 und 18 von letzterer. Schließlich ist der dritte Greifabschnitt 14 in einem zur Seite 18 hin benachbarten Gebiet mit einer Verdickung 19 versehen, der als Auflage für den linken Daumen des Fahrers ausgebildet ist.

## Patentansprüche

1. Lenkrad für Kraftfahrzeuge, insbesondere für Personenkraftwagen, mit einem Lenkradring und Speichen, die in den Lenkradring münden, wobei der Lenkradring ein metallisches Gestell besitzt, das von einer Hüllvorrichtung aus einem gummiartigen Werkstoff umgeben ist, **dadurch gekennzeichnet, dass** die Hüllvorrichtung (10) in Greifbereichen (Gbl, Gbll und Gblll) mit einer vom Fahrer bzw. seinen Fingern individuell formveränderbaren Greifeinrichtung (15) versehen ist, dergestalt, dass die Greifeinrichtung (15) aus einem Material besteht, welches bei normalem Greifen des Lenkrads formhaltig bzw. formstabil ist, jedoch unter stark erhöhtem Kraftaufwand verformt werden kann.

2. Lenkrad nach Anspruch 1, **dadurch gekennzeichnet, dass** die Greifeinrichtung (15) zumindest örtlich die Hüllvorrichtung (10) umgibt.

3. Lenkrad nach den Ansprüchen 1 und 2, **dadurch gekennzeichnet, dass** die Greifeinrichtung (15) mit einem Lenkradüberzug (11) umgeben ist.

4. Lenkrad nach Anspruch 3, **dadurch gekennzeichnet, dass** zwischen Greifeinrichtung (15) und Lenkradüberzug (11) eine Folie (16) vorgesehen ist.

5. Lenkrad nach Anspruch 1, **dadurch gekennzeichnet, dass** die Greifeinrichtung (15) mit einem ersten Greifabschnitt (12) sich über einen Teilumfang (Tu) des Lenkradrings (2) im Bereich von wenigstens einer in einer Grundstellung des Lenkrads (1) horizontal ausgerichteten Lenkradspeiche (z.B. 3) erstreckt.

6. Lenkrad nach Anspruch 5, **dadurch gekennzeichnet, dass** der erste Greifabschnitt (12) der Greifeinrichtung (15) am Außenumfang (Au) des Lenkradrings (2) vorgesehen ist.

7. Lenkrad nach Anspruch 5, **dadurch gekennzeichnet, dass** die Greifeinrichtung (15) am Innenumfang (lu) des Lenkradrings (2) vorgesehen ist, dergestalt, dass sich zweite und dritte Greifabschnitte (13 und 14) der Greifeinrichtung (15) gebietsweise zwischen dem Lenkradring (2) und der jeweiligen Speiche (z.B. 3) erstrecken.

8. Lenkrad nach Anspruch 7, **dadurch gekennzeichnet, dass** sich die zweiten und die dritte Greifabschnitte (13 und 14) der Greifeinrichtung (15) bereichsweise zu beiden Seiten (17 und 18) der Speiche (z.B. 3) erstrecken.

9. Lenkrad nach den Ansprüchen 7 und 8, **dadurch gekennzeichnet**, die Greifeinrichtung (15) am Innenumfang (lu) des Lenkradrings (2) mit einer Verdickung (19) versehen ist.

10. Lenkrad nach einem oder mehreren der vorangehenden Ansprüche, **dadurch gekennzeichnet, dass** die Greifeinrichtung (15) aus Knet, Silikon oder dgl. besteht.

## Claims

1. Steering wheel for motor vehicles, in particular passenger vehicles, with a steering wheel ring and spokes which lead into the steering wheel ring, wherein the steering wheel ring has a metallic frame which is surrounded by a covering device made from a gummy material, **characterized in that** the covering device (10) is provided in gripping regions (GbI, GbII and GbIII) with a gripping means (15), the shape of which can be changed individually by the driver or the fingers of the driver, in such a way that the gripping means (15) consists of a material which maintains the shape thereof and is dimensionally stable during normal gripping of the steering wheel but can be deformed under a greatly increased application of force.

2. Steering wheel according to Claim 1, **characterized in that** the gripping means (15) surrounds the covering device (10) at least locally.

3. Steering wheel according to Claims 1 and 2, **characterized in that** the gripping means (15) is surrounded with a steering wheel cover (11).

4. Steering wheel according to Claim 3, **characterized in that** a film (16) is provided between gripping means (15) and steering wheel cover (11).

5. Steering wheel according to Claim 1, **characterized in that** the gripping means (15) extends with a first gripping portion (12) over a partial circumference (Tu) of the steering wheel ring (2) in the region of at least one steering wheel spoke (for example 3) oriented horizontally in a basic position of the steering wheel (1).

6. Steering wheel according to Claim 5, **characterized in that** the first gripping portion (12) of the gripping means (15) is provided on the outer circumference (Au) of the steering wheel ring (2).

7. Steering wheel according to Claim 5, **characterized in that** the gripping means (15) is provided on the inner circumference (Iu) of the steering wheel ring (2) in such a way that second and third gripping portions (13 and 14) of the gripping means (15) extend in areas between the steering wheel ring (2) and the particular spoke (for example 3).

8. Steering wheel according to Claim 7, **characterized in that** the second and the third gripping portions (13 and 14) of the gripping means (15) extend in regions on both sides (17 and 18) of the spoke (for example 3).

9. Steering wheel according to Claims 7 and 8, **characterized in that** the gripping means (15) is provided with a thickened portion (19) on the inner circumference (Iu) of the steering wheel ring (2).

10. Steering wheel according to one or more of the preceding claims, **characterized in that** the gripping means (15) consists of a mouldable material, silicone or the like.

## Revendications

1. Volant pour véhicules automobiles, notamment pour voitures de tourisme, comprenant un anneau de volant et des rayons qui se terminent dans l'anneau de volant, l'anneau de volant possédant une structure métallique qui est entourée par un dispositif d'enveloppement en un matériau de type caoutchouc, **caractérisé en ce que** le dispositif d'enveloppement (10) est pourvu dans des régions de préhension (GbI, GbII et GbIII) d'un dispositif de préhension (15) de forme variable de manière individuelle par le conducteur ou ses doigts, de telle sorte que le dispositif de préhension (15) se compose d'un matériau qui, lors d'une préhension normale du volant, conserve sa forme ou a une forme stable, mais qui peut être déformé sous l'effet de l'application d'une force nettement supérieure.

2. Volant selon la revendication 1, **caractérisé en ce que** le dispositif de préhension (15) entoure au moins localement le dispositif d'enveloppement (10).

3. Volant selon les revendications 1 et 2, **caractérisé en ce que** le dispositif de préhension (15) est entouré par un revêtement de volant (11).

4. Volant selon la revendication 3, **caractérisé en ce qu'**un film (16) est prévu entre le dispositif de préhension (15) et le revêtement de volant (11).

5. Volant selon la revendication 1, **caractérisé en ce que** le dispositif de préhension (15) s'étend avec une première portion de préhension (12) sur une partie de la périphérie (Tu) de l'anneau de volant (2) dans la région d'au moins un rayon de volant (par exemple 3) orienté horizontalement dans la position de base du volant (1).

6. Volant selon la revendication 5, **caractérisé en ce que** la première portion de préhension (12) du dispositif de préhension (15) est prévue sur la périphérie extérieure (Au) de l'anneau de volant (2).

7. Volant selon la revendication 5, **caractérisé en ce que** le dispositif de préhension (15) est prévu sur la périphérie intérieure (Iu) de l'anneau de volant (2), de telle sorte que des deuxième et troisième portions de préhension (13 et 14) du dispositif de préhension (15) s'étendent en partie entre l'anneau de volant (2) et le rayon respectif (par exemple 3).

8. Volant selon la revendication 7, **caractérisé en ce que** les deuxième et troisième portions de préhension (13 et 14) du dispositif de préhension (15) s'étendent en partie jusqu'aux deux côtés (17 et 18) du rayon (par exemple 3).

9. Volant selon les revendications 7 et 8, **caractérisé en ce que** le dispositif de préhension (15) est pourvu sur la périphérie intérieure (Iu) de l'anneau de volant (2) d'un épaississement (19).

10. Volant selon l'une quelconque ou plusieurs des revendications précédentes, **caractérisé en ce que** le dispositif de préhension (15) se compose de matériau malléable, de silicone ou similaire.
